# EUROPÄISCHE PATENTSCHRIFT

(11) **EP 0 992 770 B1**
(45) Veröffentlichungstag und Bekanntmachung des Hinweises auf die Patenterteilung: **16.11.2005**
(21) Anmeldenummer: 99119416.8
(22) Anmeldetag: 30.09.1999
(51) Int. Cl.: G01G 21/28

(54) **Haushaltswaage**
Weighing device for domestic use
Dispositif de pesage à usage domestique

(30) Priorität: 06.10.1998 DE 19845966
(43) Veröffentlichungstag der Anmeldung: 12.04.2000
(73) Patentinhaber: LEIFHEIT Aktiengesellschaft, D-56377 Nassau (DE)
(72) Erfinder: Zimmer, Jürgen, 56077 Koblenz (DE)

(56) Entgegenhaltungen:
- EP-A- 0 197 253
- DE-U- 7 808 584
- DE-U- 29 722 105

## Beschreibung

Die Erfindung bezieht sich auf eine Haushaltswaage gemäß dem Oberbegriff des Anspruchs 1.

Insbesondere bei Haushaltswaagen zum Kochen und Backen ist es wünschenswert, daß diese in den Außenabmessungen klein gehalten werden, um sie leicht in Küchenschubladen unterbringen zu können. Häufig sind diese Haushaltswaagen derart gestaltet, daß sie in einer zugehörigen Schüssel zur Aufnahme des Wiegegutes untergebracht werden können und eine Größe haben, die der Grundfläche der Schüssel entspricht. Dabei wird zwar das Aufbewahrungsproblem gelöst, die Waage ist aber beim täglichen Gebrauch insofern ungünstig, als das Anzeigefeld durch die geringen Baumaße bei der Betrachtung von Oben von dem im Durchmesser größeren Schüsselrand verdeckt wird.

Aufgabe der Erfindung ist es, eine Haushaltswaage mit kompakten Außenabmessungen zu schaffen, bei der dennoch sichergestellt ist, daß auch beim Wiegen von sperrigen Dingen die Anzeige gut lesbar bleibt.

Die DE 297 22 105 zeigt eine Waage, bei der an einem Grundkörper mehrere drehbare Tragarme vorgesehen sind. An den Tragarmen befinden sich leistenförmige Kraftmesseinrichtungen, mittels denen eine Gewichtskraft messbar ist. Durch die klappbaren Tragarme soll sich ein ansprechendes Erscheinungsbild ergeben.

Aus der DE 78 08 584 U ist eine Personenwaage bekannt, bei der ein viereckiges Waagenunterteil mit einer Wiegeplattform verbunden ist. An dem Waagekörper ist ein Anzeigeteil vorgesehen, das bei Bedarf von dem Waagekörper abnehmbar ist.

Diese Aufgabe wird mit den kennzeichnenden Merkmalen des Anspruchs 1 gelöst.

Dadurch, daß die Messwertanzeigeeinheit als eigenes Bauteil ausgebildet ist und dieses Bauteil andererseits wiederum voll in die Umfangs- bzw. Außenmaße der Haushaltswaage integriert werden kann, wird eine äußerst kompakte Einheit geschaffen und dennoch eine gute Bedienbarkeit durch die Möglichkeit, die Anzeige in einer Entfernung zum Grundkörper der Haushaltswaage zu betreiben, erreicht.

In weiterer Ausgestaltung der Erfindung wird über die Lageveränderung der Messwertanzeigeeinheit ein Funktionsschalter betätigt und damit die eigentliche Wiegeeinheit aktiviert.

Zur Anordnung der Messwertanzeigeeinheit gegenüber dem Grundkörper der Haushaltswaage bieten sich dabei mehrere Möglichkeiten; sie kann schwenkbar, klappbar, faltbar und auch in oder unter bzw. über dem Grundkörper schiebbar angeordnet sein.

Natürlich bietet es sich an, auch bei einer Personenwaage die Messwertanzeigeeinheit als eigenständige Baueinheit auszubilden und diese schwenk- oder verschiebbar am Grundkörper zu lagern. Dadurch ist es möglich, die gesamte Fläche als Standfläche auszubilden und die Messwertanzeigeeinheit beim Wiegevorgang, wobei ebenfalls wieder über einen Kontaktschalter die eigentliche Wiegeeinheit aktiviert wird, in einen sichtgünstigen Bereich zu schwenken. Im Ruhezustand ist diese Messwertanzeigeeinheit geschützt unterzubringen und sie kann, weil nach Außen zu schwenken, unbeeinflußt von der Standfläche, großzügigst ausgelegt werden.

Einige Ausführungsbeispiele der Erfindung werden im folgenden anhand der Zeichnungen näher erläutert. Es zeigen.

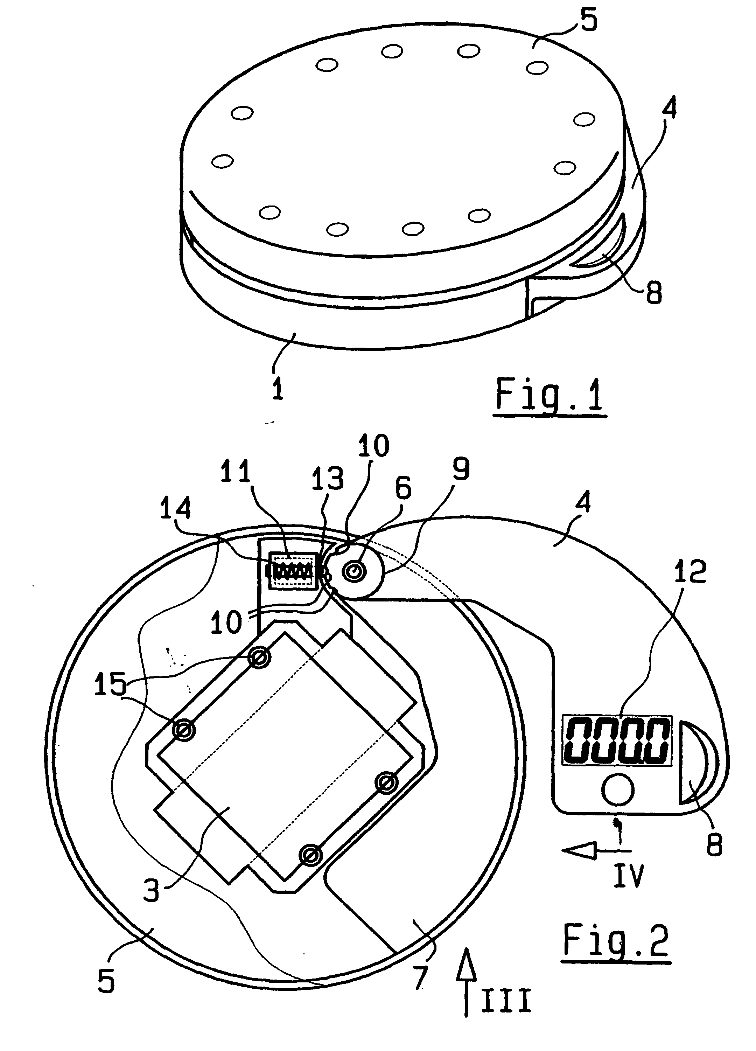

- Figur 1: eine perspektivische Ansicht einer Haushaltswaage bei eingeschwenkter Messwertanzeigeeinheit,
- Figur 2: eine Draufsicht, teilweise geschnitten, mit ausgeschwenkter Messwertanzeigeeinheit,
- Figur 3: eine Ansicht gemäß der Richtung III nach Figur 1,
- Figur 4: eine Ansicht gemäß der Richtung IV nach Figur 3,
- Figur 5: eine Alternativlösung einer Haushaltswaage mit eingeschobener Messwertanzeigeeinheit,
- Figur 6: mit ausgezogener Messwertanzeigeeinheit,
- Figur 7: eine Alternativausführung einer Haushaltswaage mit angeklappter Messwertanzeigeeinheit und
- Figur 8: mit ausgeklappter Messwertanzeigeeinheit.

Ein Grundkörper 1 mit Füßen 2 nimmt eine Messeinheit 3 und eine Messwertanzeigeeinheit 4 auf und wird von einem Gewichtaufnahmekörper 5, der sich gegen Rückstellfedern 15 abstützt, überdeckt.

Die Messwertanzeigeeinheit 4 ist im Grundkörper 1 um die Achse 6 drehbar gelagert und schwenkt im Ruhezustand in einen Aufnahmeraum 7 in den Grundkörper 1. Die Messwertanzeigeeinheit 4 ist sichelförmig ausgebildet und wird über eine Griffmulde 8 betätigt. Im Drehbereich 9 ist sie mit Rastnuten 10 versehen, die mit einem Funktionsschalter 11 zusammenwirken. Durch mehrere Rastnuten 10 kann die Messwertanzeigeeinheit 4 mit dem Display 12 mehr oder weniger weit, je nach Bedarf, ausgeschwenkt werden. Der Funktionsschalter 11 ist mit einem Rastbolzen 13, der von einer Feder 14 beaufschlagt wird, versehen.

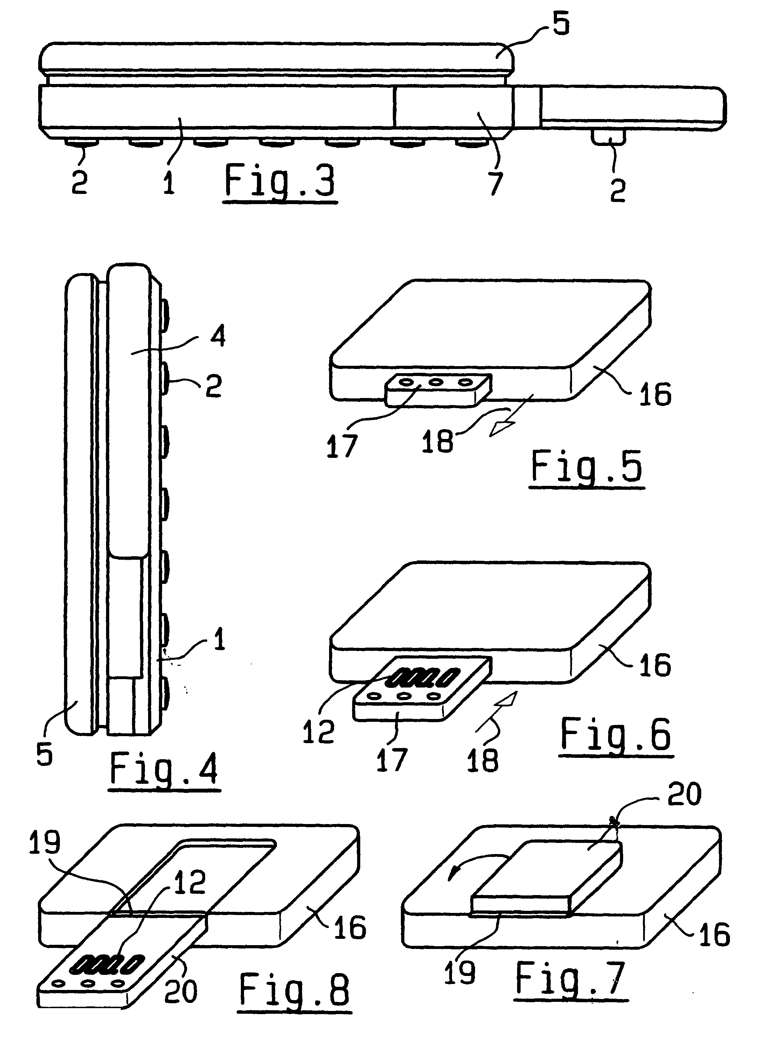

In Figur 5 ist eine Haushaltswaage mit einem rechteckigen Grundkörper 16 dargestellt, in dem eine Messwertanzeigeeinheit 17 in Pfeilrichtung 18 verschiebbar angeordnet ist. Dabei ist die Messwertanzeigeeinheit 17 in Figur 5 im Ruhezustand und in Figur 6 in der Arbeitsstellung dargestellt.

Schließlich zeigen die Figuren 7 und 8 eine Haushaltswaage ebenfalls mit einem rechteckigen Grundkörper 16 an den über ein Scharnier 19 eine Messwertanzeigeeinheit 20 verschwenkbar angeordnet ist. Die Figur 7 zeigt die Messwertanzeigeeinheit 20 in beigeklapptem und in Figur 8 in ausgeklapptem Zustand.

Besonders die Ausführungsformen der Figuren 5 bis 8 sind auch für die Ausführung als Badezimmerwaagen geeignet.

## Patentansprüche

1. Haushaltswaage mit einem feststehenden Grundkörper (1), einem zur Aufnahme des zu wiegenden Gutes gegen eine Rückstellfeder (15) beweglichen Gewichtaufnahmekörper (5), einer Messeinheit (3) und einer Messwertanzeigeeinheit, **dadurch gekennzeichnet, dass** die Messwertanzeigeeinheit (4, 17, 20) als eigene Baueinheit ausgebildet und verschwenk- oder verschiebbar am Grundkörper (1) gelagert ist, wobei sie in der Ruhestellung in einem Aufnahmeraum (7) an dem Grundkörper (1) untergebracht ist.

2. Haushaltswaage nach Anspruch 1, **dadurch gekennzeichnet, dass** die Messwertanzeigeeinheit (4, 17, 20) mit einem Funktionsschalter (11) gekoppelt ist.

3. Haushaltswaage nach Anspruch 1 oder 2, **dadurch gekennzeichnet, dass** die Messwertanzeigeeinheit (4, 17) in den Grundkörper (1, 16) integriert ist.

## Claims

1. Household scales having a stationary base body (1), a moveable scale pan (5) to hold the goods to be weighed counter to a restoring spring (15), a measuring unit (3) and a measured value display unit, **characterized in that** the measured value display unit (4, 17, 20) is constructed as a separate structural unit and is mounted on the base body (1) such that it can be pivoted and/or displaced, being accommodated in a holding space (7) on the base body (1) when in the rest position.

2. Household scales according to Claim 1, **characterized in that** the measured value display unit (4, 17, 20) is coupled to a function switch (11).

3. Household scales according to Claim 1 or 2, **characterized in that** the measured value display unit (4, 17) is integrated into the base body (1, 16).

## Revendications

1. Dispositif de pesage à usage domestique, comprenant un corps de base fixe (1), un corps de réception de poids (5) déplaçable contre un ressort de rappel (15) pour recevoir le produit à peser, une unité de mesure (3) et une unité d'affichage des valeurs de mesure, **caractérisé en ce que** l'unité d'affichage des valeurs de mesure (4, 17, 20) est réalisée sous forme d'unité constructive propre, et est montée de manière pivotante ou déplaçable sur le corps de base (1), en étant montée dans la position de repos dans un espace de réception (7) sur le corps de base (1).

2. Dispositif de pesage à usage domestique selon la revendication 1, **caractérisé en ce que** l'unité d'affichage des valeurs de mesure (4, 17, 20) est accouplée à un commutateur fonctionnel (11).

3. Dispositif de pesage à usage domestique selon la revendication 1 ou 2, **caractérisé en ce que** l'unité d'affichage des valeurs de mesure (4, 17) est intégrée dans le corps de base (1, 16).
